# EUROPÄISCHE PATENTSCHRIFT

(11) **EP 2 791 529 B1**
(45) Veröffentlichungstag und Bekanntmachung des Hinweises auf die Patenterteilung: **23.03.2016**
(21) Anmeldenummer: 12799079.4
(22) Anmeldetag: 11.12.2012
(51) Int. Cl.: F16D 25/08

(54) **ZENTRALAUSRÜCKER FÜR EINE HYDRAULISCHE KUPPLUNGSBETÄTIGUNG**
CENTRAL RELEASE UNIT FOR A HYDRAULIC CLUTCH ACTUATION MEANS
BUTÉE D'EMBRAYAGE CENTRALE POUR UN ACTIONNEMENT D'EMBRAYAGE HYDRAULIQUE

(30) Priorität: 17.12.2011 DE 202011109244 U
(43) Veröffentlichungstag der Anmeldung: 22.10.2014
(73) Patentinhaber: FTE automotive GmbH, 96106 Ebern (DE)
(72) Erfinder: GEBERT, Stefan, 96242 Sonnefeld (DE); LEHNERT, Matthias, 96050 Bamberg (DE); BRAUN, Ruthard, 97488 Stadtlauringen (DE); KUHN, Elmar, 96176 Pfarrweisach (DE); MÖLLER, Ernst, 96528 Oberesfeld (DE); GNYP, Jan, 96106 Ebern (DE)
(74) Vertreter: Oppermann, Mark
(86) Internationale Anmeldenummer: PCT/EP2012/005110
(87) Internationale Veröffentlichungsnummer: WO 2013/087192

(56) Entgegenhaltungen:
- DE-A1- 19 951 414
- DE-B4- 10 080 372
- DE-T2- 68 916 250
- GB-A- 1 439 360

## Beschreibung

### TECHNISCHES GEBIET

Die vorliegende Erfindung bezieht sich auf einen Zentralausrücker für eine hydraulische Kupplungsbetätigung gemäß dem Oberbegriff des Patentanspruchs 1. Insbesondere bezieht sich die Erfindung auf einen Zentralausrücker einer hydraulischen Kupplungsbetätigung für eine Kraftfahrzeug-Reibkupplung, wie sie massenweise in der Automobilindustrie zum Einsatz kommen.

### STAND DER TECHNIK

Eine herkömmliche hydraulische Kupplungsbetätigung für Kraftfahrzeuge hat einen an einen mit Hydraulikflüssigkeit gefüllten Ausgleichsbehälter angeschlossenen Geberzylinder, der z.B. über ein Kupplungspedal betätigt werden kann. Der Geberzylinder ist über eine Druckleitung mit einem Nehmerzylinder hydraulisch verbunden, so dass der durch Niedertreten des Kupplungspedals im Geberzylinder erzeugte Druck über die Flüssigkeitssäule in der Druckleitung auf den Nehmerzylinder übertragbar ist. Im Ergebnis wird das Ausrücklager der Reibkupplung von dem Nehmerzylinder mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen.

Um eine gleichmäßige Betätigung der Reibkupplung bei möglichst geringem Platzbedarf des Nehmerzylinders zu gewährleisten, ist es seit langem bekannt, den Nehmerzylinder als Ringzylinder auszubilden, der um die Kupplungs- bzw. Getriebewelle herum angeordnet und vorzugsweise am Getriebegehäuse befestigt ist. In dem Ringzylinder ist ein Ringkolben in axialer Richtung der Kupplungs- bzw. Getriebewelle verschiebbar angeordnet, der mit dem Ausrücklager der Reibkupplung in Wirkverbindung steht. Bei hydraulischer Beaufschlagung des Ringzylinders über die Druckleitung wirkt der Ringkolben über das Ausrücklager auf den Ausrückhebel der Reibkupplung, um diese auszurücken. Derartige Nehmerzylinder werden aufgrund ihrer zur Kupplungs- bzw. Getriebewelle konzentrischen Anordnung auch als Zentralausrücker bezeichnet.

Moderne Zentralausrücker haben ein aus Kosten- und Gewichtsgründen vornehmlich aus Kunststoff gefertigtes Zylindergehäuse mit wenigstens einer äußeren Zylinderwandung, die einen ringförmigen Druckraum nach radial außen begrenzt, in dem der mit der Kupplung wirkverbundene Ringkolben verschiebbar aufgenommen ist. Ggf. weist das aus Kunststoff gefertigte Zylindergehäuse auch eine innere Zylinderwandung auf, die den Druckraum nach radial innen begrenzt und den Ringkolben führt; andernfalls ist eine vornehmlich aus Stahlblech tiefgezogene Führungshülse konzentrisch innerhalb der Zylinderwandung angeordnet und am Zylindergehäuse befestigt, um den Druckraum nach radial innen zu begrenzen und den Ringkolben zu führen. Das Zylindergehäuse weist ferner einen im Druckraum mündenden Druckanschluss auf, über den der Druckraum wahlweise mit dem Druckmittel beaufschlagbar ist, um die Kupplung auszurücken.

Methode der Wahl zur kostengünstigen Herstellung derartiger Zylindergehäuse in großen Stückzahlen ist natürlich das Kunststoffspritzgießen. Dabei wird bekanntlich der jeweilige Kunststoff in einer Spritzeinheit einer Spritzgießmaschine geschmolzen und in ein zwei- oder mehrteiliges Spritzgießwerkzeug eingespritzt, in dem der Kunststoff sich wieder verfestigt bevor das Spritzgussteil durch bzw. nach Öffnen des Spritzgießwerkzeugs entformt wird. Der Hohlraum - die Kavität - des Spritzgießwerkzeugs bestimmt die Form und die Oberflächenstruktur des fertigen Teils. Im konkreten Fall des Zentralausrücker-Zylindergehäuses wird insbesondere der Druckanschluss vermittels eines Formkerns ausgebildet, der in das Spritzgießwerkzeug eingelegt wird und um den der Kunststoff beim Spritzgießvorgang herum fließt. Hierbei hat sich gezeigt, dass es in Flussrichtung des geschmolzenen Kunststoffs hinter dem Formkern nicht immer zu einer belastbaren Struktur des Kunststoffs kommt, so dass die Gefahr besteht, dass das Zylindergehäuse bei Druckbeaufschlagung des Druckraums im Bereich der äußeren Zylinderwandung aufreißt und dort eine Leckage entsteht. Dieser Gefahr gilt es zu begegnen.

Der den Oberbegriff des Patentanspruchs 1 bildenden DE 199 51 414 A1 (siehe insbesondere die Fig. 2 und die zugehörige Beschreibung in Spalte 5, Zeilen 59 bis 67) ist ein aus Kunststoff spritzgegossenes Zylindergehäuse eines Zentralausrückers zu entnehmen, bei dem zur Versteifung des Zylindergehäuses dessen äußere Zylinderwandung mit einer Armierung (Bezugszeichen 21) versehen ist, die im Betrieb des Zentralausrückers, d.h. bei Druckbeaufschlagung des Druckraums ein radiales Aufweiten der äußeren Zylinderwandung verhindern soll. Insbesondere wird in diesem Stand der Technik vorgeschlagen, als Armierung eine spanlos hergestellte Blechhülse zu verwenden, die durch ein Aufpressen oder Aufschrumpfen auf die Mantelfläche der äußeren Zylinderwandung kraftformschlüssig am Zylindergehäuse befestigt werden kann. Hierbei wird jedoch gerade der oben angesprochene kritische Bereich, in dem es beim Spritzgießvorgang ggf. zu einer nicht hinreichend belastbaren Struktur des Kunststoffs gekommen ist, noch zusätzlich von außen mechanisch beansprucht, so dass eine solche Armierung nicht geeignet erscheint, die erwähnte Gefahr von Leckagen zu vermeiden.

Ferner sind aus dem Stand der Technik aus Kunststoff spritzgegossene Zylindergehäuse für Zentralausrücker bekannt, bei denen während des Spritzgießvorgangs insbesondere im Bereich einer Zylinderwandung eine ggf. hülsenförmige Armierung mit um- bzw. angespritzt wird (siehe WO 90/04116 A1, Fig. 2, 4, 5 & 10: Bezugszeichen 56; DE 103 23 570 A1, Fig. 3: Bezugszeichen 19; DE 10 2008 006 202 A1, Fig. 1 & 3: Bezugszeichen 17). Zum einen kompliziert dies jedoch das Spritzgießwerkzeug und den eigentlichen Spritzgießvorgang, weil die Armierung erst in das im Hinblick auf die Eingießkanalführung und Entlüftungskanäle aufwendiger gestaltete Spritzgießwerkzeug eingelegt und dort geeignet orientiert gehalten werden muss. Zum anderen bedingt dies in der Massenfertigung unerwünschte, im Verhältnis lange Verweilzeiten des gespritzten Werkstücks in der Spritzgießform, da der Kunststoff in der Spritzgießform aufgrund des Wärmespeichervermögens der metallenen Armierung weniger schnell abkühlen und erhärten kann.

Schließlich sind aus den Druckschriften DE 43 31 728 A1 (Fig. 3) und DE 689 16 250 T2 (Fig. 1) Zentralausrücker bekannt, bei denen das aus Kunststoff bestehende Zylindergehäuse mit hohlzylindrisch geformten Stahlbändern verstärkt ist, um einer Verformung des Zylindergehäuses entgegenzuwirken. In der letztgenannten Druckschrift wird beschrieben, dass diese Bänder nach der Montage bei Umgebungstemperatur vorzugsweise jeweils exakt passend oder mit leichtem Presssitz an der jeweiligen zylindrischen Umfangsfläche des Zylindergehäuses anliegen. Dabei können ein oder mehrere Zinken aus der Ebene des jeweiligen Bandes herausgebogen sein, um eine Klemmwirkung auf die Gehäuseoberfläche auszuüben, wodurch verhindert wird, dass die Bänder unbeabsichtigt vom Zylindergehäuse abrutschen.

Ein Nachteil dieses Stands der Technik wird darin gesehen, dass aufgrund herstellungsbedingter Toleranzen ein exakter Sitz oder ein Presssitz der Stahlbänder eventuell nicht gegeben ist, so dass sich das Zylindergehäuse unter Druckbeaufschlagung der Ringkammer im Zylindergehäuse in unerwünschter Weise nach radial außen aufweiten kann. Bei zu "enger" Tolerierung der Stahlbänder hingegen sind ggf. sehr große Kräfte zur Montage der Stahlbänder aufzubringen, einhergehend mit einer hohen Flächenpressung am Zylindergehäuse, die zu einer unerwünschten Verformung des Zylindergehäuses nach radial innen und damit ebenfalls zu einer Deformation der Ringkammer führen kann. In beiden Fällen ("zu weite" oder "zu enge" Stahlbänder) kann es - neben möglichen Beschädigungen am Zylindergehäuse - auch zu Abdichtproblemen an dem in der Ringkammer aufgenommenen Ringkolben kommen.

### AUFGABENSTELLUNG

Der Erfindung liegt die Aufgabe zugrunde, für eine hydraulische Kupplungsbetätigung einen Zentralausrücker mit einem aus einem Kunststoff spritzgegossenen Zylindergehäuse zu schaffen, der möglichst einfach und kostengünstig herstellbar ist und den im Betrieb auftretenden hydraulischen Kräften zuverlässig zu widerstehen vermag.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 7.

Erfindungsgemäß ist bei einem Zentralausrücker für eine hydraulische Kupplungsbetätigung, der ein aus einem Kunststoff spritzgegossenes Zylindergehäuse hat, welches wenigstens eine außenumfangsseitig mit einer Armierungshülse versehene Zylinderwandung aufweist, die einen ringförmigen Druckraum nach radial außen begrenzt, in dem ein mit der Kupplung wirkverbindbarer Ringkolben verschiebbar aufgenommen ist, der wahlweise über einen im Druckraum mündenden Druckanschlussstutzen des Zylindergehäuses mit einem Druckmittel beaufschlagbar ist, um die Kupplung auszurücken; die Armierungshülse nach dem Spritzgießen des Zylindergehäuses an der Zylinderwandung mittels einer Schnappverbindung befestigbar, die an einem vom Druckanschlussstutzen abgewandten vorderen Ende der Armierungshülse vorgesehen ist, an dem die Armierungshülse zu einem Verrastungsabschnitt nach radial innen umgeformt ist, der zusammen mit einer am Außenumfang der Zylinderwandung angeformten Rippe die Schnappverbindung bildet, wobei die Armierungshülse an ihren Verrastungsabschnitt anschließend einen Hauptabschnitt aufweist, der zu einer im Armierungsbereich konisch ausgebildeten Außenumfangsfläche der Zylinderwandung komplementär konisch geformt ist.

Bei dem erfindungsgemäß ausgebildeten Zentralausrücker wird die Armierungshülse weder kraftformschlüssig auf die äußere Zylinderwandung aufgepresst oder aufgeschrumpft noch wird sie in die Spritzgießform eingelegt und bei dem Spritzgießvorgang umspritzt oder angespritzt, so dass die zum Stand der Technik angeführten Nachteile bei dem erfindungsgemäßen Zentralausrücker nicht auftreten. Die Armierungshülse wird nach der Entnahme des verfestigten Zylindergehäuses aus dem Spritzgießwerkzeug lediglich auf die Zylinderwandung des Zylindergehäuses aufgeschoben und mittels der Schnappverbindung befestigt, die auf der vom eingangs beschriebenen Problembereich abgewandten Seite der Armierungshülse ausgebildet ist. Beim Aufschieben der Armierungshülse auf die Zylinderwandung verrastet der Verrastungsabschnitt der Armierungshülse mit der angeformten Rippe der Zylinderwandung. Zugleich legt sich die Innenwandfläche des Hauptabschnitts der Armierungshülse im Formschluss an die Außenumfangsfläche der Zylinderwandung an, ohne dass eine nennenswerte Flächenpressung entsteht. Somit kann die Armierungshülse durch eine einfache Kraft-Weg-Steuerung während des Montagevorgangs mit einer definierten, kleinen Vorspannung am Zylindergehäuse angebracht werden. Hierdurch wird einerseits eine vergleichsweise kurze Belegungszeit der Spritzgießform und andererseits eine belastbare Struktur des Kunststoffs im armierten Bereich des Zylindergehäuses erzielt, mit einem Versteifungseffekt durch die Armierungshülse, der schon von Anfang an, d.h. auch bei niedrigen Drücken im Druckraum vorhanden ist.

Ein weiterer Vorteil der konischen Ausbildung des Hauptabschnitts der Armierungshülse besteht darin, dass die Armierungshülse eine - verglichen zu einer zylindrischen Ausbildung - höhere Formstabilität aufweist, die ggf. geeignet ist, fertigungsbedingte Unrundheiten des Zylindergehäuses auszugleichen bzw. zu korrigieren.

In einer bevorzugten Ausführungsform des Zentralausrückers ist der Verrastungsabschnitt der Armierungshülse umlaufend konisch ausgebildet, wobei der Konuswinkel des Verrastungsabschnitts mit einer Mittelachse des Zentralausrückers größer ist als derjenige des Hauptabschnitts der Armierungshülse. Was die Bemessung des Konuswinkels des Hauptabschnitts der Armierungshülse angeht, ist im Übrigen anzumerken, dass hier ein Kompromiss zu treffen ist, der berücksichtigt, dass ein größerer Konuswinkel bei der Montage der Armierungshülse einen geringeren Axialweg der Armierungshülse gegenüber dem Zylindergehäuse bedingt, ein kleinerer Konuswinkel hingegen einen größeren Axialweg. Ist der Konuswinkel zu steil, besteht - im Rahmen vorgegebener Maß-, Form- und Lagetoleranzen - die Gefahr einer übermäßigen Beanspruchung des Zylindergehäuses, neben hohen Montagekräften; ist der Konuswinkel indes zu flach, besteht die Gefahr eines radial zu losen und damit unzureichend versteifenden Sitzes der Armierungshülse am Zylindergehäuse.

Vorzugsweise ist die Armierungshülse ausgehend von einem vom Druckanschlussstutzen abgewandten vorderen Rand der Armierungshülse mit Aussparungen versehen, die den konischen Verrastungsabschnitt in mehrere Teilbereiche gliedern, die bei Verrastung der Schnappverbindung federnd nachgebend sind. Hierbei können die Aussparungen zweckmäßig bis in den Hauptabschnitt der Armierungshülse hineinreichen. Für die Erzielung gleicher Federwirkungen an den Teilbereichen ist es von Vorteil, wenn zwischen den Aussparungen in Umfangsrichtung der Armierungshülse Abstände gleicher Größe vorhanden sind. Die Aussparungen ermöglichen auch einen Werkzeugangriff beim Aufschieben der Armierungshülse auf die Außenumfangsfläche der Zylinderwandung.

Vorzugsweise ist die Armierungshülse aus einem ebenen Blech tiefgezogen. Durch den Tiefziehvorgang wird auch in einfacher Weise erreicht, dass die Armierungshülse an einem dem Druckanschlussstutzen zugewandten hinteren Ende mit einer an die Innenumfangsfläche der Armierungshülse stufenlos anschließenden umlaufenden Abrundung versehen ist. Die Abrundung entsteht, wenn das ebene Blech mittels des Tiefziehstempels über den Ziehring gezogen wird. Die Abrundung erleichtert das Aufschieben der Armierungshülse auf die Zylinderwandung des Zylindergehäuses.

### KURZE BESCHREIBUNG DER ZEICHNUNGEN

Im Folgenden wird die Erfindung anhand eines bevorzugten Ausführungsbeispiels unter Bezugnahme auf die beigefügten Zeichnungen näher erläutert. In den Zeichnungen zeigen:
- Fig. 1: eine Längsschnittansicht des Zentralausrückers,
- Fig. 2: eine vergrößerte Einzelheit des Zentralausrückers entsprechend dem Ausschnittskreis II in Fig. 1,
- Fig. 3: eine perspektivische Ansicht der Armierungshülse,
- Fig. 4: eine Seitenansicht der Armierungshülse und
- Fig. 5: einen abgebrochenen Schnitt durch die Armierungshülse.

### DETAILLIERTE BESCHREIBUNG DES AUSFÜHRUNGSBEISPIELS

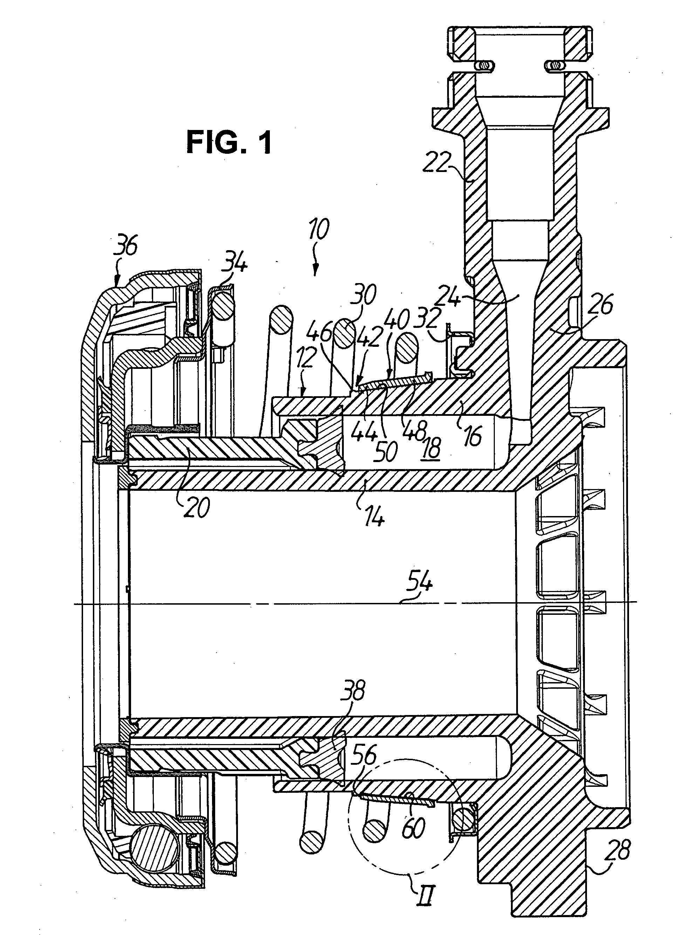

In Fig. 1 ist ein Zentralausrücker 10 für eine hydraulische Kupplungsbetätigung für Trockenreibungskupplungen im nicht montierten Zustand in Grundstellung dargestellt. Der Zentralausrücker 10 hat ein aus Kunststoff, beispielsweise aus GF-gefülltem Polyphtalamid, spritzgegossenes Zylindergehäuse 12 mit zwei konzentrisch angeordneten Zylinderwandungen, nämlich einer inneren Zylinderwandung 14 und einer äußeren Zylinderwandung 16, die einen ringförmigen Druckraum 18 begrenzen. In dem Druckraum 18 ist ein mit der Kupplung (nicht dargestellt) wirkverbindbarer Ringkolben 20 verschiebbar aufgenommen, der wahlweise über einen Druckanschlussstutzen 22 des Zylindergehäuses 12 mit einem Druckmittel beaufschlagbar ist, um die Trockenreibungskupplung durch Verschiebung des Ringkolbens 20 auszurücken. Der Druckanschlussstutzen 22 ist zu diesem Zweck über einen in das Zylindergehäuse 12 eingeformten Kanal 24 mit dem Druckraum 18 verbunden, so dass das Druckmittel, nämlich Hydraulikflüssigkeit, dem Druckraum 18 über den Kanal 24 zugeführt werden kann.

Die konzentrisch zueinander angeordneten Zylinderwandungen 14 und 16 sind an ihrem in Fig. 1 rechts dargestellten Ende über einen Flanschabschnitt 26 miteinander verbunden. Der Flanschabschnitt 26 ist außenumfangsseitig mit einer Mehrzahl von winkelbeabstandeten Befestigungsaugen (nicht dargestellt) versehen, die im Kraftfahrzeug auf an sich bekannte Weise der Befestigung des Zentralausrückers 10 an einer Getriebewand bzw. einem Getriebedeckel (nicht dargestellt) mittels beispielsweise Schrauben (nicht dargestellt) dienen, welche die Befestigungsaugen durchgreifen und den Zentralausrücker 10 mit einer Stirnseite 28 des Zylindergehäuses 12 gegen die Getriebewand bzw. den Getriebedeckel ziehen. Das Zylindergehäuse 12 mit dem sich an den Flanschabschnitt 26 anschließenden Druckanschlussstutzen 22, seinen Zylinderwandungen 14 und 16 und dem diese verbindenden, die Befestigungsaugen aufweisenden Flanschabschnitt 26 ist vorzugsweise einteilig aus Kunststoff spritzgegossen.

Die äußere Zylinderwandung 16 ist von einer Vorlastfeder 30 umhüllt, im dargestellten Ausführungsbeispiel einer sich konisch erweiternden Schraubendruckfeder, die sich an ihrem in Fig. 1 rechten Ende über ein ringförmiges Blechteil 32 am Flanschabschnitt 26 des Zylindergehäuses 12 abstützt und auf ihrer in Fig. 1 linken Seite über einen aus einem Metallblech tiefgezogenen Federteller 34 eine definierte Vorspannkraft auf ein an sich bekanntes Ausrücklager 36 aufbringt. Das Ausrücklager 36 ist am in Fig. 1 linken Ende des Ringkolbens 20 auf geeignete Weise befestigt, so dass das Ausrücklager 36 bei Druckbeaufschlagung des ringförmigen Druckraums 18 in axialer, d. h. in Fig. 1 horizontaler Richtung verschiebbar ist, um die Trockenreibkupplung in an sich bekannter Weise aus- bzw. einzurücken.

Am in Fig. 1 rechten Ende des Ringkolbens 20, der in der dargestellten Grundstellung in axialer Richtung noch mit der äußeren Zylinderwandung 16 überlappt, ist eine dynamische Dichtung in der Form einer elastomeren Dichtmanschette 38 auf geeignete Weise angebracht. Die hier zur Vereinfachung der Darstellung im unverformten Zustand gezeigte Dichtmanschette 38 liegt sowohl an der inneren Zylinderwandung 14 des Zylindergehäuses 12 als auch an der äußeren Zylinderwandung 16 des Zylindergehäuses 12 dicht an, um den Druckraum 18 bezogen auf die Fig. 1 nach links abzudichten.

Die äußere Zylinderwandung 16 ist an ihrem Außenumfang mit einer Armierungshülse 40 versehen, die in der in Fig. 1 gezeigten Lage der zum Zentralausrücker 10 gehörenden Teile an der äußeren Zylinderwandung 16 mittels einer nachfolgend noch näher beschriebenen Schnappverbindung 42 befestigt ist, die am vom Druckanschlussstutzen 22 abgewandten Ende der Armierungshülse 40 vorgesehen ist. Die Armierungshülse 40 ist etwa im mittleren Bereich der äußeren Zylinderwandung 16 angeordnet, der gegen den Druck im Druckraum 18 zur Vermeidung von schädlichen Strukturänderungen des Kunststoffs abzustützen ist.

Die Armierungshülse 40, die aus einem ebenen Metallblech tiefgezogen ist, ist an ihrem vom Druckanschlussstutzen 22 abgewandten vorderen Ende umlaufend zu einem konischen Verrastungsabschnitt 44 nach radial innen umgeformt. Dieser Verrastungsabschnitt 44 bildet zusammen mit einer am Außenumfang der äußeren Zylinderwandung 16 umlaufend angeformten Rippe 46 die Schnappverbindung 42.

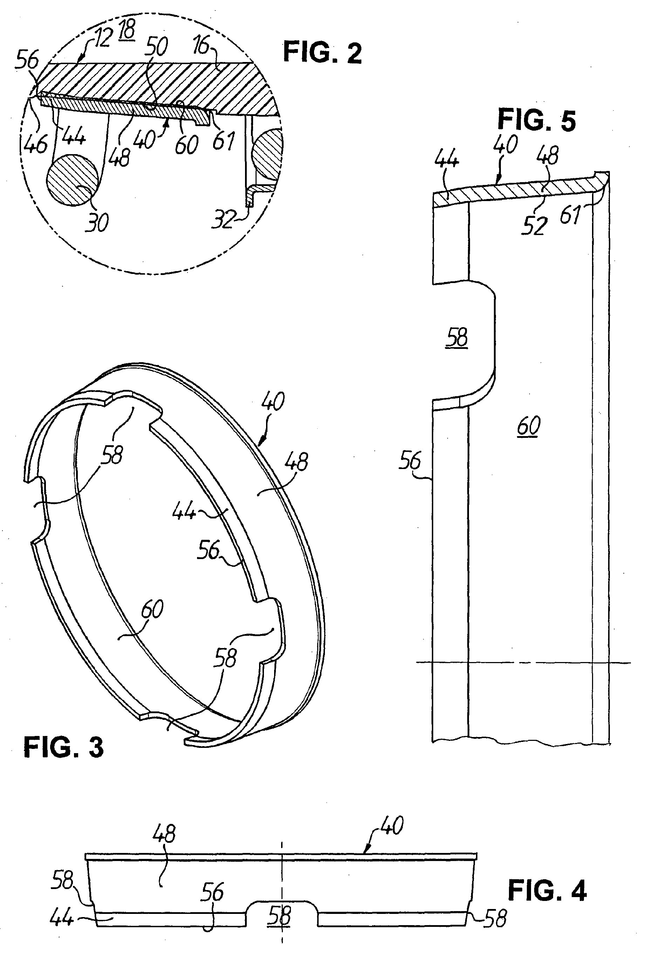

Wie am besten aus den Fig. 3 - 5 ersichtlich ist weist die Armierungshülse 40 an ihren konischen Verrastungsabschnitt 44 anschließend einen ebenfalls konisch geformten Hauptabschnitt 48 auf. Dieser Hauptabschnitt 48 ist zu der im Armierungsbereich ebenfalls konisch ausgebildeten Außenumfangsfläche 50 der äußeren Zylinderwandung 16 komplementär konisch geformt, sodass sich beim Aufschieben der Armierungshülse 40 auf die äußere Zylinderwandung 16 zwischen der Innenumfangsfläche 52 der Armierungshülse 40 und der konischen Außenumfangsfläche 50 der äußeren Zylinderwand 16 ein radialspielfreier aber praktisch druckfreier Formschluss ergibt. Der Konuswinkel des Verrastungsabschnitts 44 mit der Mittelachse 54 des Zentralausrückers 10 ist wegen der Umformung des Verrastungsabschnitts 44 nach radial innen größer als der Konuswinkel des Hauptabschnitts 48 zur Mittelachse 54 des Zentralausrückers.

Die Armierungshülse 40 ist ausgehend von ihrem vom Druckanschlussstutzen 22 abgewandten vorderen Rand 56 mit Aussparungen 58 versehen, von denen im Ausführungsbeispiel vier Aussparungen 58 vorgesehen sind, aber auch mehr vorgesehen sein können, zwischen denen in Umfangsrichtung der Armierungshülse 40 gesehen Abstände gleicher Größe vorhanden sind. Die Aussparungen 58 gliedern den Verrastungsabschnitt 44 der Armierungshülse 40 in vier Teilbereiche, die zur Verrastung der Schnappverbindung 42 hinreichend federnd nachgebend sind. Die Aussparungen 58 sind bis in den Hauptabschnitt 48 der Armierungshülse 40 hineinreichend ausgebildet, was den Federungseigenschaften der zwischen den Aussparungen 58 befindlichen Teilbereiche förderlich ist. Beim Aufschieben der Armierungshülse 40 auf die Außenumfangsfläche 50 der äußeren Zylinderwandung 16 dienen die Aussparungen 58 dem Werkzeugangriff (nicht dargestellt).

Um eine leichte bzw. glatte Aufschiebbarkeit der Armierungshülse 40 auf die konische Außenumfangsfläche 50 der äußeren Zylinderwandung 16 sicherzustellen, ist die Armierungshülse 40 an ihrem dem Druckanschlussstutzen 22 zugewandten hinteren Ende mit einer an die Innenumfangsfläche 60 der Armierungshülse 40 stufenlos anschließenden umlaufenden Abrundung 61 versehen, wie am deutlichsten aus Fig. 5 hervorgeht. Diese Abrundung 61 entsteht bei dem die Armierungshülse 40 formenden Tiefziehvorgang und wird bei dem anschließenden Randbeschnitt der Armierungshülse 40 nicht entfernt.

Ein Zentralausrücker für eine hydraulische Kupplungsbetätigung besitzt ein aus einem Kunststoff spritzgegossenes Zylindergehäuse, welches wenigstens eine außenumfangsseitig mit einer Armierungshülse versehene Zylinderwandung aufweist, die einen ringförmigen Druckraum nach radial außen begrenzt, in dem ein mit der Kupplung wirkverbindbarer Ringkolben verschiebbar aufgenommen ist, der wahlweise über einen im Druckraum mündenden Druckanschlussstutzen mit einem Druckmittel beaufschlagbar ist, um die Kupplung auszurücken. Die Armierungshülse ist nach dem Spritzgießen des Zylindergehäuses an der Zylinderwandung befestigbar, wofür an einem vom Druckanschlussstutzen abgewandten vorderen Ende der Armierungshülse eine Schnappverbindung vorgesehen ist. Letztere wird gebildet durch einen nach radial innen umgeformten Verrastungsabschnitt der Armierungshülse und eine am Außenumfang der Zylinderwandung angeformte Rippe. Dabei weist die Armierungshülse einen an den Verrastungsabschnitt anschließenden Hauptabschnitt auf, der zu einer im Armierungsbereich konisch ausgebildeten Außenumfangsfläche der Zylinderwandung komplementär konisch geformt ist.

### BEZUGSZEICHENLISTE

- 10: Zentralausrücker
- 12: Zylindergehäuse
- 14: innere Zylinderwandung
- 16: äußere Zylinderwandung
- 18: Druckraum
- 20: Ringkolben
- 22: Druckanschlussstutzen
- 24: Kanal
- 26: Flanschabschnitt
- 28: Stirnseite
- 30: Vorlastfeder
- 32: Blechteil
- 34: Federteller
- 36: Ausrücklager
- 38: Dichtmanschette
- 40: Armierungshülse
- 42: Schnappverbindung
- 44: Verrastungsabschnitt
- 46: Rippe
- 48: Hauptabschnitt
- 50: Außenumfangsfläche
- 52: Innenumfangsfläche
- 54: Mittelachse
- 56: Rand
- 58: Aussparungen
- 60: Innenumfangsfläche
- 61: Abrundung

## Patentansprüche

1. Zentralausrücker (10) für eine hydraulische Kupplungsbetätigung, mit einem aus einem Kunststoff spritzgegossenen Zylindergehäuse (12), welches wenigstens eine außenumfangsseitig mit einer Armierungshülse (40) versehene Zylinderwandung (16) aufweist, die einen ringförmigen Druckraum (18) nach radial außen begrenzt, in dem ein mit der Kupplung wirkverbindbarer Ringkolben (20) verschiebbar aufgenommen ist, der wahlweise über einen im Druckraum (18) mündenden Druckanschlussstutzen (22) des Zylindergehäuses (12) mit einem Druckmittel beaufschlagbar ist, um die Kupplung auszurücken, wobei die Armierungshülse (40) nach dem Spritzgießen des Zylindergehäuses (12) an der Zylinderwandung (16) befestigbar ist, **dadurch gekennzeichnet, dass** zur Befestigung der Armierungshülse (40) eine Schnappverbindung (42) an einem vom Druckanschlussstutzen (22) abgewandten vorderen Ende der Armierungshülse (40) vorgesehen ist, an dem die Armierungshülse (40) zu einem Verrastungsabschnitt (44) nach radial innen umgeformt ist, der zusammen mit einer am Außenumfang der Zylinderwandung (16) angeformten Rippe (46) die Schnappverbindung (42) bildet, wobei die Armierungshülse (40) an ihren Verrastungsabschnitt (44) anschließend einen Hauptabschnitt (48) aufweist, der zu einer im Armierungsbereich konisch ausgebildeten Außenumfangsfläche (50) der Zylinderwandung (16) komplementär konisch geformt ist.

2. Zentralausrücker (10) nach Anspruch 1, **dadurch gekennzeichnet, dass** der Verrastungsabschnitt (44) der Armierungshülse (40) umlaufend konisch ausgebildet ist, wobei der Konuswinkel des Verrastungsabschnitts (44) mit einer Mittelachse (54) des Zentralausrückers (10) größer ist als derjenige des Hauptabschnitts (48) der Armierungshülse (40).

3. Zentralausrücker (10) nach Anspruch 2, **dadurch gekennzeichnet, dass** die Armierungshülse (40) ausgehend von einem vom Druckanschlussstutzen (22) abgewandten vorderen Rand (56) der Armierungshülse (40) mit Aussparungen (58) versehen ist, die den konischen Verrastungsabschnitt (44) in mehrere Teilbereiche gliedern, die bei Verrastung der Schnappverbindung (42) federnd nachgebend sind.

4. Zentralausrücker (10) nach Anspruch 3, **dadurch gekennzeichnet, dass** die Aussparungen (58) bis in den Hauptabschnitt (48) der Armierungshülse (40) hineinreichen.

5. Zentralausrücker (10) nach Anspruch 3 oder 4, **dadurch gekennzeichnet, dass** zwischen den Aussparungen (58) in Umfangsrichtung der Armierungshülse (40) Abstände gleicher Größe vorhanden sind.

6. Zentralausrücker (10) nach einem der vorhergehenden Ansprüche, **dadurch gekennzeichnet, dass** die Armierungshülse (40) aus einem ebenen Blech tiefgezogen ist.

7. Zentralausrücker (10) nach einem der vorhergehenden Ansprüche, **dadurch gekennzeichnet, dass** die Armierungshülse (40) an einem dem Druckanschlussstutzen (22) zugewandten hinteren Ende mit einer umlaufenden Abrundung (61) versehen ist, die an einer Innenumfangsfläche (60) der Armierungshülse (40) stufenlos anschließt.

## Claims

1. Concentric slave cylinder (10) for a hydraulic clutch actuating means, comprising a cylinder housing (12) which is injection-molded from a plastics material and which has at least one cylinder wall (16) provided with a reinforcing sleeve (40) at an outer circumferential side, the cylinder wall radially outwardly bounding an annular pressure chamber (18) in which an annular piston (20) operatively connectable with the clutch is received to be displaceable, which annular piston, in order to release the clutch, can be selectively acted on by a pressure medium via a pressure connecting stub pipe (22) of the cylinder housing (12), which communicates with the pressure chamber (18), wherein the reinforcing sleeve (40) after injection-molding of the cylinder housing (12) is attachable to the cylinder wall (16), **characterized in that**, for attaching the reinforcing sleeve (40), a snap connection (42) is provided at a front end of the reinforcing sleeve (40) remote from the pressure connecting stub pipe (22), the reinforcing sleeve (40) being deformed radially inwardly at the front end to form a detent section (44) which together with a rib (46) formed at the outer circumference of the cylinder wall (16) forms the snap connection (42), wherein the reinforcing sleeve (40) has a main section (48) which adjoins its detent section (44) and which is conically shaped to be complementary to an outer circumferential surface (50) of the cylinder wall (16) formed to be conical in the reinforcing region.

2. Concentric slave cylinder (10) according to claim 1, **characterized in that** the detent section (44) of the reinforcing sleeve (40) is formed to be conically encircling, wherein the cone angle of the detent section (44) with a center axis (54) of the concentric slave cylinder (10) is greater than that of the main section (48) of the reinforcing sleeve (40).

3. Concentric slave cylinder (10) according to claim 2, **characterized in that** the reinforcing sleeve (40) starting from a front edge (56) of the reinforcing sleeve (40) remote from the pressure connecting stub pipe (22) is provided with cut-outs (58) dividing the conical detent section (44) into a plurality of sub-regions which are resiliently yielding when detenting of the snap connection (42) takes place.

4. Concentric slave cylinder (10) according to claim 3, **characterized in that** the cut-outs (58) extend into the main section (48) of the reinforcing sleeve (40).

5. Concentric slave cylinder (10) according to claim 3 or 4, **characterized in that** spacings of equal size are present between the cut-outs (58) in the circumferential direction of the reinforcing sleeve (40).

6. Concentric slave cylinder (10) according to any one of the preceding claims, **characterized in that** the reinforcing sleeve (40) is deep-drawn from planar sheet metal.

7. Concentric slave cylinder (10) according to any one of the preceding claims, **characterized in that** the reinforcing sleeve (40) is provided at a rear end facing the pressure connecting stub pipe (22) with an encircling radius portion (61) steplessly connecting with an inner circumferential surface (60) of the reinforcing sleeve (40).

## Revendications

1. Butée de débrayage centrale (10) pour un actionnement hydraulique d'embrayage, comprenant un carter de cylindre (12) moulé par injection en matière plastique, qui présente au moins une paroi de cylindre (16) munie, sur sa périphérie extérieure, d'un manchon d'armature de renfort (40) et délimitant radialement vers l'extérieur une chambre de pression (18) de forme annulaire dans laquelle est logé de manière coulissante un piston annuaire (20) pouvant interagir avec l'embrayage et pouvant être sollicité sélectivement par un agent de pression par l'intermédiaire d'un embout de raccordement de pression (22) du carter de cylindre (12), débouchant dans la chambre de pression (18), en vue d'assurer le débrayage de l'embrayage, le manchon d'armature de renfort (40) pouvant être fixé à la paroi de cylindre (16) après le moulage par injection du carter de cylindre (12), **caractérisée en ce que** pour la fixation du manchon d'armature de renfort (40), il est prévu une liaison par enclenchement (42) à une extrémité avant du manchon d'armature de renfort (40), qui est située à l'opposé de celle dirigée vers l'embout de raccordement de pression (22), et au niveau de laquelle le manchon d'armature de renfort (40) est déformé radialement vers l'intérieur en un tronçon d'encliquetage (44) réalisant, en commun avec une nervure (46) formée par moulage sur la périphérie extérieure de la paroi de cylindre (16), ladite liaison par enclenchement (42), le manchon d'armature de renfort (40) présentant, à la suite de son tronçon d'encliquetage (44), un tronçon principal (48), qui est d'une forme conique complémentaire à une surface périphérique extérieure (50) de la paroi de cylindre (16) de configuration conique dans la zone de renfort.

2. Butée de débrayage centrale (10) selon la revendication 1, **caractérisée en ce que** le tronçon d'encliquetage (44) du manchon d'armature de renfort (40) est de configuration périphérique conique, l'angle de cône du tronçon d'encliquetage (44) formé avec un axe central (54) de la butée de débrayage centrale (10), étant supérieur à celui du tronçon principal (48) du manchon d'armature de renfort (40).

3. Butée de débrayage centrale (10) selon la revendication 2, **caractérisée en ce que** le manchon d'armature de renfort (40) est pourvu, à partir d'une bordure avant (56) du manchon d'armature de renfort (40), qui est située à l'opposé de celle dirigée vers l'embout de raccordement de pression (22), d'encoches (58) subdivisant le tronçon d'encliquetage conique (44) en plusieurs zones partielles, qui fléchissent élastiquement lors de l'encliquetage de la liaison par enclenchement (42).

4. Butée de débrayage centrale (10) selon la revendication 3, **caractérisée en ce que** les encoches (58) s'étendent jusque à l'intérieur du tronçon principal (48) du manchon d'armature de renfort (40).

5. Butée de débrayage centrale (10) selon la revendication 3 ou la revendication 4, **caractérisée en ce qu'**entre les encoches (58) sont réalisées des distances d'espacement de même grandeur dans la direction périphérique du manchon d'armature de renfort (40).

6. Butée de débrayage centrale (10) selon l'une des revendications précédentes, **caractérisée en ce que** le manchon d'armature de renfort (40) est obtenu par emboutissage d'une tôle plane.

7. Butée de débrayage centrale (10) selon l'une des revendications précédentes, **caractérisée en ce que** le manchon d'armature de renfort (40) est pourvu, à une extrémité arrière dirigée vers l'embout de raccordement de pression (22), d'un arrondi (61) périphérique, qui se raccorde, sans étagement, à une surface périphérique intérieure (60) du manchon d'armature de renfort (40).
